# EUROPEAN PATENT APPLICATION

(11) **EP 3 590 742 A1**
(43) Date of publication of application: **08.01.2020**
(21) Application number: 18181991.3
(22) Date of filing: 05.07.2018
(51) Int. Cl.: B60H 1/00, B60H 1/22

(54) **METHOD AND REMOTE CONTROL UNIT FOR HEATER OF VEHICLE**

(71) Applicant: EMBELIN OY, 90120 Oulu (FI)
(72) Inventor: Simula, Kai, 90120 Oulu (FI); Sormunen, Jouko, 90120 Oulu (FI)
(74) Representative: Kolster Oy Ab

(57) **Abstract**

Method and remote control unit for heater of vehicle. The method includes the following: detecting (202) a stimulus (signal sent by the remote control unit) to switch the heater on,; obtaining (204) a current location of the vehicle; and if the current location of the vehicle matches (206 MATCH) a location-dependent condition, commanding (208) the heater to switch on. The operation in a hazardous location like a petrol station or a parking hall is thus prevented.

## Description

### FIELD

The invention relates to a remote control unit for a heater of a vehicle, and to a method for remote-controlling a heater of a vehicle.

### BACKGROUND

ISO 26262 "Road vehicles - Functional safety" is an international standard for functional safety of electrical and/or electronic systems in production automobiles.

It is a generally accepted safety requirement that two timers may be set for the following day to switch a heater of a vehicle on.

However, let us assume that the first timer is in the morning, let us say 7:00. This may be considered safe as a driver of the vehicle is usually at home in the morning. But, let us further assume that the second timer is in the afternoon, let us say 17:00. This may not be safe, after all, as the driver may be at work, but the driver may also be in another place, in a petrol station or in an unknown parking hall. The operation of the heater in such an environment may cause hazard.

### BRIEF DESCRIPTION

The present invention seeks to provide an improved remote control unit for a heater of a vehicle, and an improved method for remote-controlling a heater of a vehicle.

According to an aspect of the present invention, there is provided a remote control unit as specified in claim 1.

According to another aspect of the present invention, there is provided a method as specified in claim 8.

### LIST OF DRAWINGS

Example embodiments of the present invention are described below, by way of example only, with reference to the accompanying drawings, in which
Figures 1A and 1B illustrates example embodiments of a remote control unit for a heater of a vehicle; and
Figure 2 illustrates example embodiments of a method for remote-controlling a heater of a vehicle.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

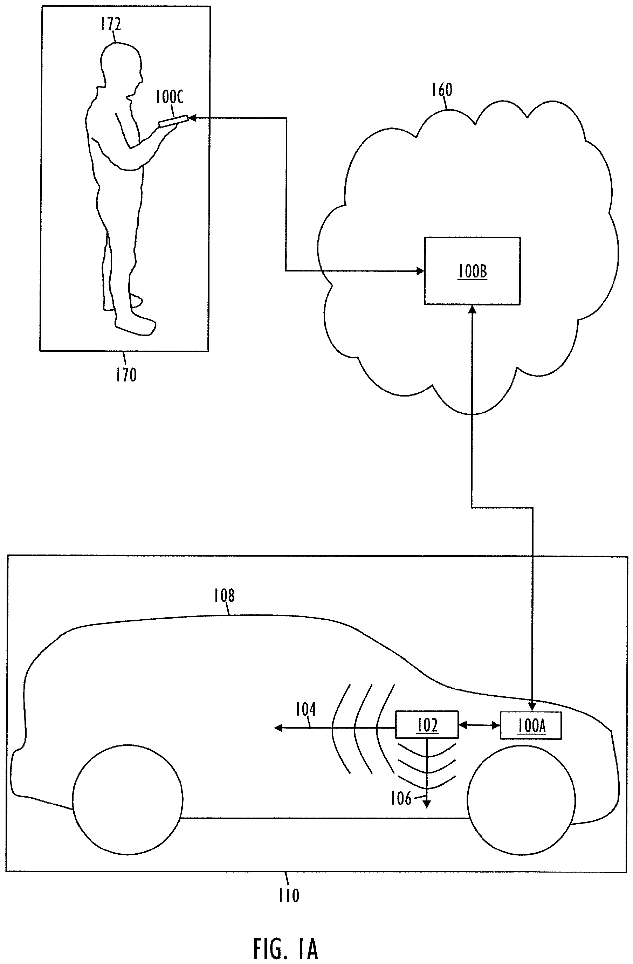

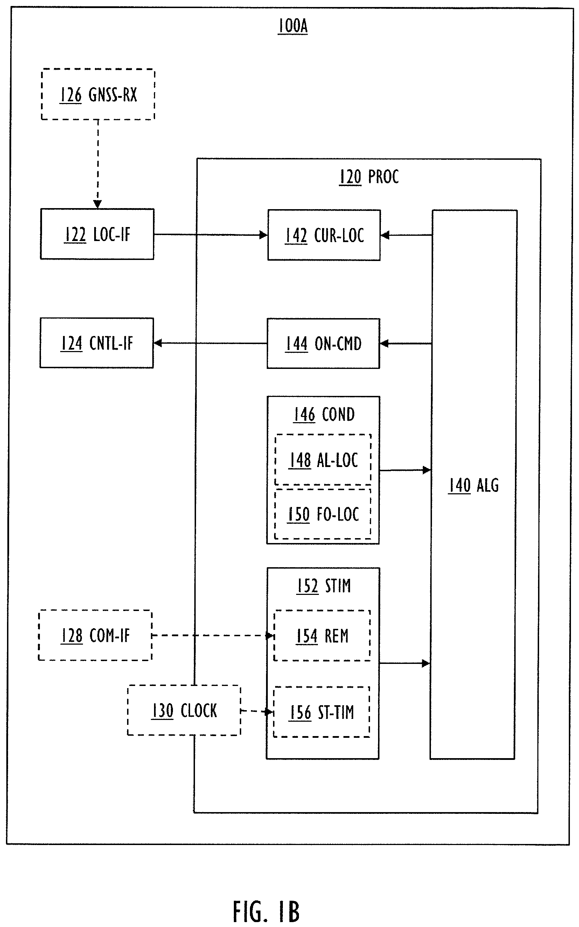

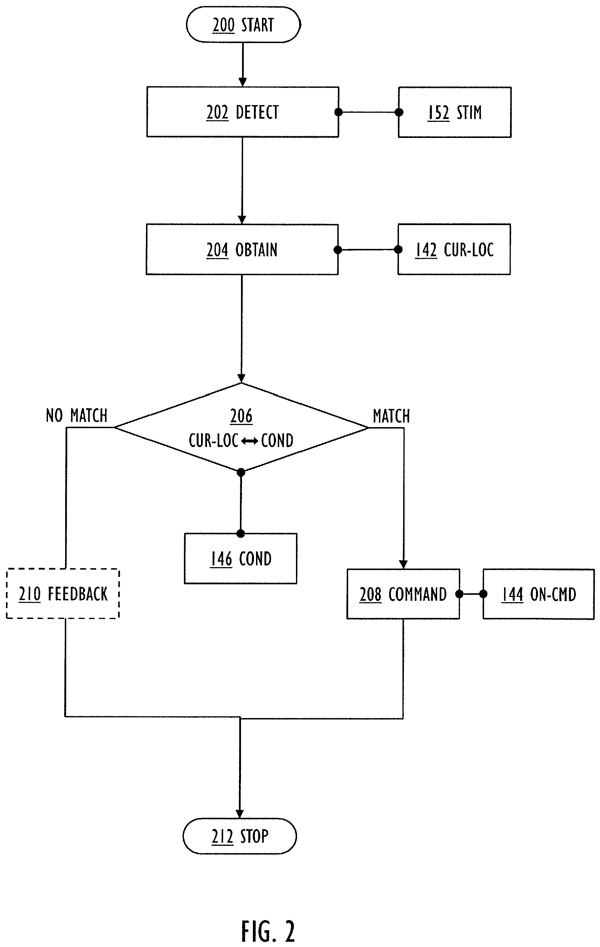

Let us study simultaneously both Figures 1A and 1B, which illustrate example embodiments of a remote control unit 100A, 100B, 100C for a heater 102 of a vehicle 108, and Figure 2, which illustrates example embodiments of a method for remote-controlling the heater 102 of the vehicle 108.

The vehicle 108 may be designed or used to transport people or cargo. The term "vehicle" 108 includes land-based vehicles, such as cars, lorries/trucks, trailers, motorhomes, caravans and motorcycles. However, the example embodiments may be applied to other kinds of vehicles 108 as well, such as watercraft (ships, boats), aircraft, or trains, for example.

The heater 102 of the vehicle 108 may be a parking heater (or a preheater, or an auxiliary heater), such as those manufactured by the German company Webasto®. The heater 102 may heat 104 a passenger compartment of the vehicle 108, and/or the heater 102 may heat 106 a motor of the vehicle 108.

The control unit 100A, 100B, 100C implements remote-control for the heater 102, and may be of the type designed by the applicant, Embelin Oy, for integration or retrofit to the heater 102.

As shown in Figure 1A, the control unit 100A, 100B, 100C functionality may be distributed: naturally, there must be control unit 100A aboard the vehicle 108, but there may also be a server 100B in a wireless communication network 160 and/or a user apparatus 100C for a driver 172 of the vehicle 108.

The control unit 100A may be an external module for the heater 102 or an integral part of the heater 102.

The server 100B may be a networked computer server, which interoperates with the control unit 100A according to a client-server architecture, a cloud computing architecture, a peer-to-peer system, or another applicable computing architecture.

The user apparatus 100C may be a mobile, portable or stationary computing device. A non-limiting list of the user apparatus 100C comprises but is not limited to: a computer, a portable computer, a laptop, a mobile phone, a smartphone, a tablet computer, a smartwatch, smartglasses, or another applicable portable/mobile/stationary computing device.

The wireless communication network 160 may utilize a suitable cellular communication technology such as GSM, GPRS, EGPRS, WCDMA, UMTS, 3GPP, IMT, LTE, LTE-A, 2G/3G/4G/5G, etc. and/or a suitable non-cellular communication technology such as Bluetooth, Bluetooth Low Energy, Wi-Fi, WLAN, Zigbee, etc. The data may be passed between various actors 100A, 100B, 100C using text messages or data packets, for example.

The control unit 100A, 100B, 100C comprises a location interface 122 configured to obtain a location of the vehicle 108, and a control interface 124, communicatively coupled with the heater 102, and configured to issue a command to the heater 102.

The interfaces 122, 124 may be implemented with any suitable interface technology, such as a manufacturer proprietary communication bus, Bluetooth®, 1-Wire bus, LIN-bus, CAN (Controller Area Network) bus, or with a software interface (method or message interface, for example).

The control unit also comprises (one or more) processing unit 120, communicatively coupled with the location interface 122 and the control interface 124.

The processing unit 120 may be implemented with a processor (such as a microprocessor or a microcontroller) and software, as an integrated circuit, as an application-specific integrated circuit (ASIC), or as any other way of implementing a device that is capable of remote-controlling the heater 102.

Naturally, the control unit 100A may comprise other structures and functions: a dust/water/vibration-proof housing and a power interface (obtaining electric energy from a battery of the vehicle 108), for example.

The processing unit 120 is configured to cause the execution of the method of Figure 2. The method forms the backbone of an algorithm 140 running in the processing unit 140.

The method of Figure 2 starts in 200.

In 202, a stimulus 152 to switch the heater 102 on is detected.

In 204, a current location 142 of the vehicle 108 is obtained via the location interface 122.

In 206, a test is made: if the current location 142 of the vehicle 108 matches 206 MATCH a location-dependent condition 146, the heater 102 is commanded via the control interface 124 to switch on 144 in 208.

If the current location 142 of the vehicle 108 does not match 206 NO MATCH the location-dependent condition 146, the heater 102 remains switched off, and possibly appropriate feedback 210 is given to the driver 172 via a user interface (such as with a touchscreen of the user apparatus 100C) communicatively coupled with the control unit 100A, 100B, 100C.

The method ends in 212 after the processing is finished,

Let us examine Figure 1A. As can be seen, the vehicle is in the location 110, which is different from the location 170 of the driver 172. Therefore, the driver 172 is not able to check whether the use of heater 102 could be hazardous in the current location 110 of the vehicle 108. The situation may also be such that the stimulus is 152 is a set timer, whereby it can happen that the vehicle 108 is in such a location 110 where it is forbidden to use the heater 108, in a petrol station, in an underground car park, near gas bottles, etc. Now, with the described sequence 202-204-206 of operations, it may be checked, using the location-dependent condition 146, whether the heater 102 may be used or not.

Let us now study some optional example embodiments, which may augment the described method.

In an example embodiment, the processing unit 120 is configured to perform the following: detecting 202 the stimulus 152 by comparing a stored start-up time 156 with a current clock time 130 and detecting that the current clock time 130 matches the stored start-up time 156. The current clock time 130 may be received from a clock circuit of the control unit 100A or the vehicle 108, or from a global navigation satellite system receiver 126, or the server 100B may obtain the current clock time 130, for example.

In an example embodiment, the remote control unit 100A further comprises a wireless communication interface 128, communicatively coupled with the processing unit 120, and configured to receive remote control 154. The processing unit 120 is configured to perform the following: detecting 202 the stimulus 152 by receiving, via the communication interface 128, the remote control 154.

In an example embodiment, the processing unit 120 is configured to perform the following: obtaining 204 the current location 142 of the vehicle 108 from a global navigation satellite system (GNSS) receiver 126 placed in the vehicle 108. The GNSS may be GPS, Glonass or Galileo, for example. The current location 142 may also be obtained 204 by other means: from a cellular network-based positioning, from a positioning system employing RFID tags, etc. The current location 142 may be obtained 204 with a frequency of one Hertz from the GNSS receiver 126, and if the vehicle 108 enters an indoor location, the last obtained location 142 may be used. Furthermore, if the current location 142 cannot be obtained 204, the heater 102 may not be remote-controlled. In such a case, the driver 172 may only switch the heater 102 on by entering the vehicle 108 and actually pressing a button or performing a similar user interface operation on-site.

In an example embodiment, the processing unit 120 is configured to perform the following: the current location 142 of the vehicle 108 matches 206 MATCH the location-dependent condition 146 if the current location 142 of the vehicle 108 matches an allowed location 148. The driver 172 may define that the allowed location 148 is the home address, for example. Naturally, there may be plurality of allowed locations 148, which may have been inputted by the driver 172, or the server 100B may have defined a list of allowed locations, such as parking halls were use of heaters 102 is allowed, allowed streets, etc.

In an example embodiment, the processing unit 120 is configured to perform the following: the current location 142 of the vehicle 108 matches 206 MATCH the location-dependent condition 146 if the current location 142 of the vehicle 108 mismatches a list of forbidden locations 150. The driver 172 may define that the forbidden location 150 is the work address, for example. Naturally, there may be plurality of forbidden locations 150, which may have been inputted by the driver 172, or the server 100B may have defined the list of the forbidden locations, such as parking halls were use of heaters 102 is not allowed, petrol stations, etc. The petrol stations etc. may also be compiled from map data including all petrol stations of Finland, Germany or Europe, for example.

The allowed locations 148 and/or the forbidden locations 150 may also be compiled from big data maintained by the server 100B, i.e., from a large number of control apparatuses 100A operating in the field.

In an example embodiment, the processing unit 120 is configured to perform the following: processing each location 142, 148, 150 as an address. The address may include a street name, house number, and a name of the city or municipality, for example. There may also be a certain tolerance: a circle with a diameter of a predetermined number of meters (for example 10 meters, 50 meters, 100 meters, 200 meters, depending on the positioning accuracy) around the location, for example. This tolerance may aid the processing, as there may be an inaccuracy in the definition of the current location 142, due to inaccuracy of the GNSS, for example.

It will be obvious to a person skilled in the art that, as technology advances, the inventive concept can be implemented in various ways. The invention and its embodiments are not limited to the example embodiments described above but may vary within the scope of the claims.

## Claims

1. A remote control unit (100A, 100B, 100C) for a heater (102) of a vehicle (108) comprising:
a location interface (122) configured to obtain a location of the vehicle (108);
a control interface (124), communicatively coupled with the heater (102), and configured to issue a command to the heater (102); and
a processing unit (120), communicatively coupled with the location interface (122) and the control interface (124), and configured to perform the following:
detecting (202) a stimulus (152) to switch the heater (102) on;
obtaining (204), via the location interface (122), a current location (142) of the vehicle (108); and
if the current location (142) of the vehicle (108) matches (206 MATCH) a location-dependent condition (146), commanding (208), via the control interface (124), the heater (102) to switch on (144).

2. The remote control unit of claim 1, wherein the processing unit (120) is configured to perform the following:
detecting (202) the stimulus (152) by comparing a stored start-up time (156) with a current clock time (130) and detecting that the current clock time (130) matches the stored start-up time (156).

3. The remote control unit of any preceding claim, further comprising a wireless communication interface (128), communicatively coupled with the processing unit (120), and configured to receive remote control (154), and wherein the processing unit (120) is configured to perform the following:
detecting (202) the stimulus (152) by receiving, via the communication interface (128), the remote control (154).

4. The remote control unit of any preceding claim, wherein the processing unit (120) is configured to perform the following:
obtaining (204) the current location (142) of the vehicle (108) from a global navigation satellite system receiver (126) placed in the vehicle (108).

5. The remote control unit of any preceding claim, wherein the processing unit (120) is configured to perform the following:
the current location (142) of the vehicle (108) matches (206 MATCH) the location-dependent condition (146) if the current location (142) of the vehicle (108) matches an allowed location (148).

6. The remote control unit of any preceding claim, wherein the processing unit (120) is configured to perform the following:
the current location (142) of the vehicle (108) matches (206 MATCH) the location-dependent condition (146) if the current location (142) of the vehicle (108) mismatches a list of forbidden locations (150).

7. The remote control unit of any preceding claim, wherein the processing unit (120) is configured to perform the following:
processing each location (142, 148, 150) as an address.

8. A method for remote-controlling a heater of a vehicle, comprising:
detecting (202) a stimulus to switch the heater on;
obtaining (204) a current location of the vehicle; and
if the current location of the vehicle matches (206 MATCH) a location-dependent condition, commanding (208) the heater to switch on.
